# EUROPEAN PATENT APPLICATION

(11) **EP 4 618 410 A1**
(43) Date of publication of application: **17.09.2025**
(21) Application number: 24382276.4
(22) Date of filing: 14.03.2024
(51) Int. Cl.: H02S 50/00

(54) **CONTROL METHOD OF A SOLAR PHOTOVOLTAIC INSTALLATION AND SOLAR PHOTOVOLTAIC INSTALLATION**

(71) Applicant: P4Q Electronics, S.L., 48810 Alonsotegi (ES)
(72) Inventor: VEGAS DIEZ, David, 39880 Valle de Villaverde (ES); FERNANDEZ DIAZ, Jose Maria, 48008 Bilbao (ES); GONZALEZ FUENTES, Fernando Jose, 48640 Berango (ES)
(74) Representative: Galbaian S.Coop.

(57) **Abstract**

Control method of a solar photovoltaic installation and a solar photovoltaic installation comprising photovoltaic panels connected in series with each other through a power line that extracts the electrical power generated by the panels to send it to an inverter, wherein the method comprises a current monitoring stage (S1) in which the current flowing through the power line is measured, an voltage decrease stage (S2) in which, when the current is lower than the reference value, the panels are acted upon to reduce the voltage of the panels, and a voltage increase stage (S3), subsequent to the decrease stage (S2), in which, when the current flowing through the power line is higher than the reference value, the panels are acted upon to increase the voltage of the panels.

## Description

### TECHNICAL FIELD

The present invention relates to solar photovoltaic installations.

### PRIOR ART

Solar photovoltaic installations have solar trackers comprising a set of photovoltaic panels that generate electrical power from the solar radiation received on the surface of the photovoltaic panels and an inverter that receives the electrical power generated by the set of photovoltaic panels of the solar tracker to inject it into the electrical grid. The photovoltaic panels are connected in series with each other through a power line that extracts the electrical power generated by the photovoltaic panels to send it to the inverter, the terminals of the set of photovoltaic panels being connected to the input terminals of the inverter through the power line. In addition, the inverter has an overvoltage protection system that blocks the inverter when the voltage between the inverter input terminals is above a threshold voltage value.

When the inverter disconnects from the grid, and therefore stops feeding power into the grid, e.g. due to a fault in the inverter or due to maintenance work, the photovoltaic panels are left without a load connected to them, in what is called an open circuit state, where the voltage produced by each panel is at its maximum, so that in order for the inverter to restart feeding power back into the grid, the inverter must be reset and the voltage between the inverter input terminals needs to be below the threshold voltage value.

### DISCLOSURE OF THE INVENTION

The object of the invention is to provide a method of controlling a solar photovoltaic installation and a solar photovoltaic installation for carrying out said method, as defined in the claims.

One aspect of the invention relates to a control method of a solar photovoltaic installation, wherein the installation comprises at least one solar tracker with a set of photovoltaic panels that generate electrical power from the solar radiation received on the surface of the photovoltaic panels and an inverter that receives the electrical power generated by the set of photovoltaic panels of the solar tracker to inject it into the electrical grid, the set of photovoltaic panels being connected in series with each other through a power line that extracts the electrical power generated by the photovoltaic panels to send it to the inverter, and wherein the set of photovoltaic panels have a negative terminal and a positive terminal connected to input terminals of the inverter, the inverter having an overvoltage protection system that blocks the inverter when the voltage between the input terminals of the inverter is above a threshold voltage value.

The control method of the solar photovoltaic installation comprises:
- a current monitoring stage in which the current flowing in the power line is measured to determine if it is below a reference value,
- a voltage decrease stage wherein, when the current flowing in the power line is less than the reference value, at least one of the photovoltaic panels is acted upon to reduce the voltage between the negative terminal and the positive terminal of the set of photovoltaic panels to a voltage value below the threshold voltage value of the overvoltage protection system of the inverter, and
- a voltage increase stage, subsequent to the voltage decrease stage, in which, when the current flowing through the power line is greater than the reference value, at least one of the photovoltaic panels is acted upon to increase the voltage between the negative terminal and the positive terminal of the set of photovoltaic panels.

Another aspect of the invention relates to a solar photovoltaic installation comprising at least one solar tracker with a set of photovoltaic panels that generate electrical power from the solar radiation received by the photovoltaic panels and an inverter that receives the electrical power generated by the set of photovoltaic panels of the solar tracker to inject it into the electrical grid, the set of photovoltaic panels being connected in series with each other through a power line that extracts the electrical power generated by the photovoltaic panels to send it to the inverter, and wherein the set of photovoltaic panels have a negative terminal and a positive terminal connected to input terminals of the inverter, the inverter having an overvoltage protection system that blocks the inverter when the voltage between the input terminals of the inverter is above a threshold voltage value. The installation additionally comprises a current sensor which measures the current flowing in the power line, and a control unit which receives the value of the current measured by the current sensor and compares it with a reference value, such that when the current flowing in the power line is lower than the reference value, the control unit sends a signal to act on at least one of the photovoltaic panels to reduce the voltage between the negative terminal and the positive terminal of the set of photovoltaic panels to a voltage value below the threshold voltage value of the overvoltage protection system of the inverter, and when the current flowing through the power line is greater than the reference value, the control unit sends another signal to act on at least one of the photovoltaic panels and increase the voltage between the negative terminal and the positive terminal of the set of photovoltaic panels.

The invention makes it possible to detect when the current on the power line is abnormally low or zero, which indicates that the inverter is not feeding electrical power into the grid, for example, due to a fault in the inverter or due to maintenance work. At this point, one or more of the photovoltaic panels of the solar tracker can be actuated to lower the voltage on the photovoltaic panels, and prevent the voltage between the negative terminal and the positive terminal of the set of photovoltaic panels from being higher than the threshold voltage allowed by the inverter. In this way, when the inverter is ready to feed power back into the grid, the inverter is not blocked, as the threshold voltage of the overvoltage protection system of the inverter is not exceeded. In this way, it is not necessary to reset the inverter.

In addition, the invention also makes it possible to detect when power returns to the power line, indicating that the inverter is feeding power into the grid, at which point it can act on one or more of the photovoltaic panels of the solar tracker to increase the voltage on the photovoltaic panels and return the solar installation to normal operating conditions.

An additional advantage of the invention is that by monitoring the current in the power line connecting the panels, it is possible to know indirectly whether the inverter is feeding power into the grid, avoiding the need to establish direct communication with the inverter for this purpose.

These and other advantages and features of the invention will become apparent in view of the figures and the detailed description of the invention.

### DESCRIPTION OF THE DRAWINGS

Figure 1 shows an example of a solar photovoltaic installation according to the invention with a set of photovoltaic panels connected in series in a string.
Figure 2 shows the voltage-current and electrical power characteristic curves of a photovoltaic panel.
Figure 3 shows a flow diagram of the method of the invention.
Figure 4 shows another example of a solar photovoltaic installation for carrying out the method of the invention.

### DETAILED DISCLOSURE OF THE INVENTION

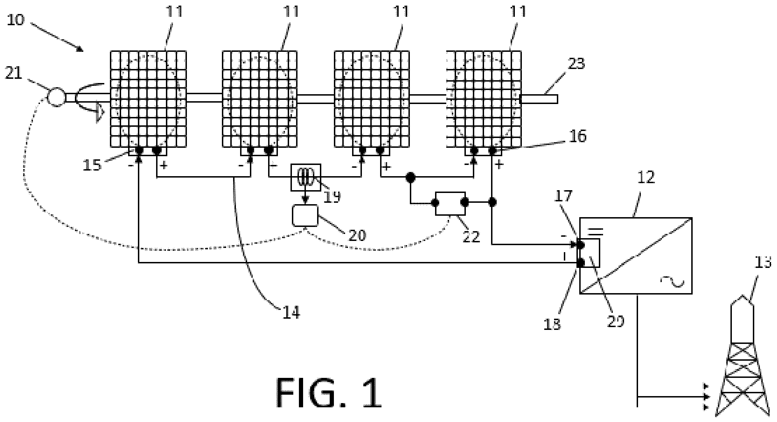

The invention relates to a control method of a solar photovoltaic installation. As shown in the example of Figure 1, the solar photovoltaic installation comprises at least one solar tracker 10 with a set of photovoltaic panels 11 that generate electrical power from the solar radiation received on the surface of the photovoltaic panels 11 and an inverter 12 that receives the electrical power generated by the set of photovoltaic panels 11 of the solar tracker 10 to inject it into the electrical grid 13. The inverter 12 transforms the energy in the form of direct current generated by the panels 11 into alternating current and modifies the voltage value to adapt it to the voltage of the electrical grid 13.

The set of photovoltaic panels 11 are connected in series with each other through a power line 14 that extracts the electrical power generated by the photovoltaic panels 11 and sends it to the inverter 12. This power line 14 is commonly known as the "string" of the solar tracker.

The set of photovoltaic panels11 of the solar tracker 10 has a negative terminal 15 and a positive terminal 16 connected to input terminals 17 and 18 of the inverter 12. The photovoltaic panels 11 of the solar tracker are electrically connected in series in a string, and each panel 11 has a negative terminal and a positive terminal, the positive terminal of one panel being connected to the negative terminal of the next panel of the string. Thus, the negative terminal 15 of the set of photovoltaic panels 11 corresponds to the negative terminal of the first panel of the string and the positive terminal 16 of the set of photovoltaic panels 11 corresponds to the positive terminal of the last panel 11 of the string.

The inverter 12 has a DC side with input terminals 17 and 18 that are connected to terminals 15 and 16 of the set of photovoltaic panels 11, and an AC side with output terminals connected to the grid 13.

The inverter 12 has an overvoltage protection system 29 that blocks the inverter 12 when the voltage between the input terminals 17 and 18 of the inverter 12 is above a threshold voltage value.

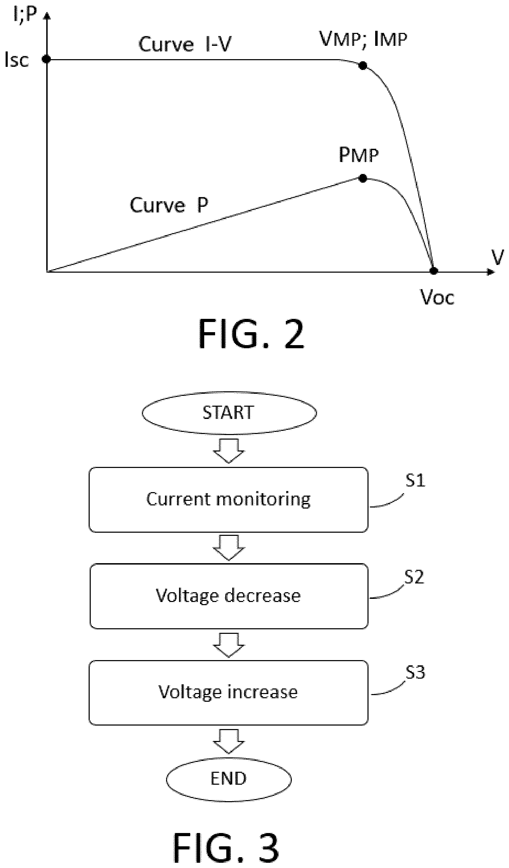

Figure 2 shows a graph with the voltage-current characteristic curve V-I and the electrical power characteristic curve P of a photovoltaic panel 11 of the set of panels. On the ordinate axis the current I and power P are shown and on the abscissa axis the voltage V is shown. The value Isc shows the maximum current that can be generated by panel 11. The value Voc shows the open-circuit voltage of panel 11, which is the maximum voltage that can occur in panel 11. The Voc voltage is given when there is no current flowing through the panel, which is usually because there is no load connected to the panel, e.g. when the inverter is disconnected from the grid and is not feeding power into the grid. The values V_{MP} and I_{MP} are the voltage value V_{MP} and the current value I_{MP} at the maximum power point P_{MP} , which occur when the photovoltaic panel is operating at maximum efficiency, which is essentially when the solar radiation is incident substantially perpendicular to the surface of the panel.

It is known that the performance of the photovoltaic panels is affected by temperature variations. Specifically, as the temperature decreases, the performance is positively affected, increasing the electrical power generated, but the voltage Voc of the photovoltaic panels also increases, so that in locations with cold temperatures, it can occasionally happen that the inverter overvoltage protection system is activated, requiring manual intervention to reset the inverter. The invention proposes a control method of a solar photovoltaic installation that in such conditions avoids inverter blockage without the need to reset the inverter.

As shown in the flowchart in Figure 3, the method comprises a current monitoring stage S1 in which the current flowing in the power line 14 is measured to determine if it is below a reference value, a voltage decrease stage S2 wherein, when the current flowing in the power line 14 is less than the reference value, at least one of the photovoltaic panels 11 is acted upon to reduce the voltage between the negative terminal 15 and the positive terminal 16 of the set of photovoltaic panels 11 to a voltage value below the threshold voltage value of the surge protection system 29 of the inverter 12, and a voltage increase stage S3, subsequent to the voltage decrease stage S2, in which, when the current flowing through the power line 14 is greater than the reference value, at least one of the photovoltaic panels 11 is acted upon to increase the voltage between the negative terminal 15 and the positive terminal 16 of the set of photovoltaic panels 11. In this way, the inverter 12 is prevented from blocking when the current on the power line 14 is reactivated without the need to reset the inverter 12.

Preferably, the reference value is less than 100 mA. Essentially the current in the power line 14 is zero when the inverter 12 is not feeding electrical power into the grid 13, however, there may be a minimum current in the power line 14 even when the inverter 12 is disconnected from the power line 14, for example, due to other electronic components that are fed by the power generated by the panels 11 through the power line 14. It is obvious that such a reference value may vary, for example, depending on the number of panels 11 of the solar tracker 10 and the technical specifications of such panels, but in any case, such a reference value allows detecting that the inverter 12 has disconnected from the power grid 13 by ceasing to feed electrical power into the power grid 13.

To generate the electrical power, the set of photovoltaic panels 11 is arranged at an operation angular position which may be the angular position of the photovoltaic panels 11 at which the conversion of solar radiation into electrical power is maximised. For example, the operation angular position is an angular position in which the surface of the photovoltaic panels 11 is in a plane substantially perpendicular to the solar radiation. Such operation angular position may be a fixed angular position, as the panels 11 may be static and throughout the day the angle of incidence of solar radiation with respect to the surface of the panels changes, or it may be a variable angular position, as the panels 11 may be movable and throughout the day the angle of incidence of solar radiation remains perpendicular to the surface of the panels.

According to an example of the invention, to reduce the voltage between the negative terminal 15 and the positive terminal 16 of the set of photovoltaic panels 11, the set of photovoltaic panels 11 is moved to an unfocused angular position, which is different from the operating angular position, wherein the solar radiation received on the surface of the photovoltaic panels 11 is reduced, and to increase the voltage between the negative terminal 15 and the positive terminal 16 of the set of photovoltaic panels 11, the set of photovoltaic panels 11 is moved to the operating angular position. In this way, when abnormally low or no current is detected on the power line 14, the panels 11 are defocused away from their angular operating to reduce the voltage between the negative terminal 15 and the positive terminal 16, so that when the inverter 12 is operational again, the overvoltage blockage at the inverter input does not occur, and as soon as the current on the power line 14 starts to increase, the photovoltaic panels 11 can be refocused back to their angular operating position.

Preferably, the unfocused angular position may be an angular position in which the surface of the photovoltaic panels 11 is in a plane substantially parallel to the solar radiation. In any case, the unfocused angular position may be any angular position of the panels at which the total sum of the voltage Voc of the panels is lower than the threshold voltage value of the overvoltage protection system 29 of the inverter 12.

According to another example of the invention, in stage S2, in order to reduce the voltage between the negative terminal 15 and the positive terminal 16 of the set of photovoltaic panels 11, at least one of the photovoltaic panels 11 is disconnected from the power line 14, and the rest of the photovoltaic panels 11 remain connected in series with each other through the power line 14, and in stage S3, in order to increase the voltage between the negative terminal 15 and the positive terminal 16 of the set of photovoltaic panels11, the photovoltaic panel 11 that had been disconnected is connected to the power line 14. In this way, when an abnormally reduced or zero current is detected on the power line 14, one of the panels 11 is disconnected from the line 14, eliminating the voltage generated by said panel 11, and when the current on the power line 14 starts to increase, said panel 11 is reconnected.

Preferably, in stage S2, to reduce the voltage between the negative terminal 15 and the positive terminal 16 of the set of photovoltaic panels 11, several photovoltaic panels 11 are disconnected from the power line 14, and the rest of the photovoltaic panels 11 remain connected in series with each other through the power line 14, and, in stage S3, to increase the voltage between the negative terminal 15 and the positive terminal 16 of the set of photovoltaic panels 11, the photovoltaic panels 11 that had been disconnected are connected to the power line 14. In this way, the voltage generated by the panels 11 is further reduced. When the current on line 14 is reactivated, the photovoltaic panels 11 can be reconnected all at the same time, or they can be connected one at a time to achieve a more controlled increase in the electrical power being fed into the grid 13.

Defocusing photovoltaic panels 11 is preferable when solar tracker 10 has panels 11 that are movable, and decoupling photovoltaic panels 11 is preferable when solar tracker 10 has panels 11 that are fixed, however, the two forms can be used simultaneously to reduce and increase the voltage.

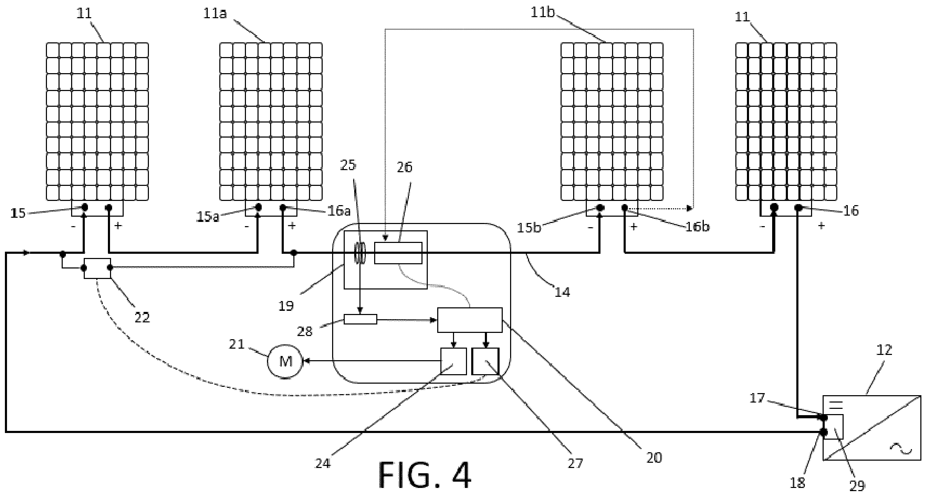

As shown in the examples of Figures 1 and 4, the installation additionally comprises a current sensor 19 which measures the current flowing in the power line 14, and a control unit 20 which receives the value of the current measured by the current sensor 19 and compares it with a reference value, such that when the current flowing in the power line 14 is lower than the reference value, the control unit 20 sends a signal to act on at least one of the photovoltaic panels 11 to reduce the voltage between the negative terminal 15 and the positive terminal 16 of the set of photovoltaic panels 11 to a voltage value below the threshold voltage value of the overvoltage protection system 29 of the inverter 12, and when the current flowing through the power line 14 is greater than the reference value, the control unit 20 sends another signal to act on at least one of the photovoltaic panels 11 and increase the voltage between the negative terminal 15 and the positive terminal 16 of the set of photovoltaic panels 11.

The control unit 20 may comprise a controller, processor, microprocessor, FPGA or any other computationally capable device.

The control unit 20 can be a stand-alone unit located at a fixed point on the solar tracker 10, or it can be a decentralised unit formed by several interlinked computationally capable devices located at different locations on the solar tracker 10.

Preferably, according to an example of the invention, the control unit 20 is communicated with a motor 21 that moves the set of photovoltaic panels 11 to an angular operating position wherein the surface of the photovoltaic panels 11 is in a plane substantially perpendicular to the solar radiation, such that to reduce the voltage between the negative terminal 15 and the positive terminal 16 of the set of photovoltaic panels 11, the control unit 20 sends an actuating signal to the motor 21 to move the set of photovoltaic panels 11 to an unfocused angular position, which is different from the operating angular position, wherein the solar radiation received on the surface of the photovoltaic panels 11 is reduced, and to increase the voltage between the negative terminal 15 and the positive terminal 16 of the set of photovoltaic panels 11, the control unit 20 sends an actuating signal to the motor 21 to move the set of photovoltaic panels 11 to the angular operating position.

For example, as shown in Figure 1, the motor 21 may drive a main shaft 23 of the solar tracker 10 on which the photovoltaic panels 11 are arranged to simultaneously move the set of photovoltaic panels 11 between the operating angular position and the unfocused angular position. Preferably, the control unit 20 comprises a motor controller 24 (known as the driver of the motor) that sends actuation signals to the motor 21. For example, the motor controller 24 may be a current amplifier that receives a low current signal and amplifies it to obtain a higher current signal that may drive the motor 21.

Preferably, according to another example of the invention, the control unit 20 communicates with at least one bypass switch 22 that connects and disconnects at least one of the photovoltaic panels 11 from the power line 14, such that to reduce the voltage between the negative terminal 15 and the positive terminal 16 of the set of photovoltaic panels 11, the control unit 20 sends a disconnection signal to the bypass switch 22 to disconnect the photovoltaic panel 11 from the power line 14, and the rest of the photovoltaic panels 11 remain connected in series with each other through the power line 14, and to increase the voltage between the negative terminal 15 and the positive terminal 16 of the set of photovoltaic panels 11, the control unit 20 sends a connection signal to the bypass switch 22 to connect the photovoltaic panel 11 that had been disconnected to the power line 14.

Even more preferably, the bypass switch 22 connects and disconnects several photovoltaic panels from the power line 14, such that to reduce the voltage between the negative terminal 15 and the positive terminal 16 of the set of photovoltaic panels 11, the control unit 20 sends a disconnection signal to the bypass switch 22 to disconnect several photovoltaic panels 11 from the power line 14, and the rest photovoltaic panels 11 remain connected in series with each other through the power line 14, and in order to increase the voltage between the negative terminal 15 and the positive terminal 16 of the set of photovoltaic panels 11, the control unit 20 sends a connection signal to the bypass switch 22 to connect the photovoltaic panels 11 that had been disconnected to the power line 14.

The example in Figure 4 shows the control unit 20 in communication with the motor 21 and a bypass switch 22 that connects and disconnects two photovoltaic panels 11, so that to reduce the voltage generated by the panels 11, the panels 11 can be moved to the unfocused angular position and/or panels 11 can be disconnected from the power line 14, increasing the versatility of operation of the solar photovoltaic installation. Figure 1 shows a bypass switch 22 that connects and disconnects a single photovoltaic panel 11. However, multiple bypass switches 22 can be used to connect and disconnect panels independently.

Preferably, the control unit 20 comprises a coupling/decoupling unit 27 which sends the connection and disconnection signals to the bypass switch 22 which is responsible for connecting and disconnecting the panels 11 from the power line 14.

Preferably, and as seen in detail in Figure 4, the current sensor 19 is connected in series in the power line 14 between the positive terminal 16a of a first photovoltaic panel 11a and the negative terminal 15b of a second photovoltaic panel 11b of the set of photovoltaic panels 11 to receive electric power from the power line 14 and is also connected between the negative terminal 15b and the positive terminal 16b of a photovoltaic panel 11b of the set of photovoltaic panels 11 to receive electric power from the photovoltaic panel 11b. In this way, a system self-powered from the power line 14 is obtained, which does not need external power supply devices for its operation, remaining active even when the inverter 12 stops allowing the passage of current.

Even more preferably, and as seen in detail in said Figure 4, the current sensor 19 comprises a current probe 25 which is inserted in the power line 14 and a power supply 26 which is powered by the current flowing through the power line 14 and by the voltage established between the negative terminal 15b and the positive terminal 16b of a photovoltaic panel 11b. Thus, the power supply 26 is a voltage/current power supply. The power supply 26 may be connected to the control unit 20 to electrically power the control unit 20.

The current probe 25 may be a shunt resistor inserted in the power line 14 so that the current measurement can be determined indirectly by measuring the voltage drop across the shunt resistor.

In addition, the solar photovoltaic installation includes a galvanic isolation unit 28 to isolate the control unit 20 from the current sensor 19. Thus, high voltages that may occur at the current sensor 19 do not affect the control unit 20.

Figures 1 and 4 show a solar tracker 10 with several photovoltaic panels 11 connected in series forming a string of panels 11, however, the solar tracker 10 may have several strings of panels 11 connected in parallel, and all the strings connected to an inverter 12.

## Claims

1. Control method of a solar photovoltaic installation, wherein the installation comprises at least one solar tracker (10) with a set of photovoltaic panels (11) that generate electrical power from the solar radiation received on the surface of the photovoltaic panels (11) and an inverter (12) that receives the electrical power generated by the set of photovoltaic panels (11) of the solar tracker (10) to inject it into the electrical grid (13), the set of photovoltaic panels (11) being connected in series with each other through a power line (14) that extracts the electrical power generated by the photovoltaic panels (11) to send it to the inverter (12), and wherein the set of photovoltaic panels (11) have a negative terminal (15) and a positive terminal (16) connected to input terminals (17,18) of the inverter (12), the inverter (12) having an overvoltage protection system (29) that blocks the inverter (12) when the voltage between the input terminals (17,18) of the inverter (12) is above a threshold voltage value, **characterised in that** the control method of the solar photovoltaic installation comprises:
- a current monitoring stage (S1) in which the current flowing in the power line (14) is measured to determine if it is below a reference value,
- a voltage decrease stage (S2) wherein, when the current flowing in the power line (14) is less than the reference value, at least one of the photovoltaic panels (11) is acted upon to reduce the voltage between the negative terminal (15) and the positive terminal (16) of the set of photovoltaic panels (11) to a voltage value below the threshold voltage value of the overvoltage protection system (29) of the inverter (12), and
- a voltage increase stage (S3), subsequent to the voltage decrease stage (S2), in which, when the current flowing through the power line (14) is greater than the reference value, at least one of the photovoltaic panels (11) is acted upon to increase the voltage between the negative terminal (15) and the positive terminal (16) of the set of photovoltaic panels (11).

2. Method according to claim 1, wherein, to generate the electrical power, the set of photovoltaic panels (11) is arranged at an operation angular position wherein the surface of the photovoltaic panels (11) is in a plane substantially perpendicular to the solar radiation, and wherein to reduce the voltage between the negative terminal (15) and the positive terminal (16) of the set of photovoltaic panels (11), the set of photovoltaic panels (11) is moved to an unfocused angular position, which is different from the operation angular position, wherein the solar radiation received on the surface of the photovoltaic panels (11) is reduced, and to increase the voltage between the negative terminal (15) and the positive terminal (16) of the set of photovoltaic panels(11), the set of photovoltaic panels(11) is moved to the operating angular position.

3. Method according to claim 2, wherein the unfocused angular position is an angular position in which the surface of the photovoltaic panels (11) is in a plane substantially parallel to the solar radiation.

4. Method according to any of the preceding claims, wherein to reduce the voltage between the negative terminal (15) and the positive terminal (16) of the set of photovoltaic panels (11), at least one of the photovoltaic panels (11) is disconnected from the power line (14), and the rest of the photovoltaic panels (11) remain connected in series with each other through the power line (14), and to increase the voltage between the negative terminal (15) and the positive terminal (16) of the set of photovoltaic panels (11), the photovoltaic panel (11) that had been disconnected is connected to the power line (14).

5. Method according to the preceding claim, wherein to reduce the voltage between the negative terminal (15) and the positive terminal (16) of the set of photovoltaic panels(11), several photovoltaic panels (11) are disconnected from the power line (14), and the rest of the photovoltaic panels (11) remain connected in series with each other through the power line (14), and to increase the voltage between the negative terminal (15) and the positive terminal (16) of the set of photovoltaic panels(11), the photovoltaic panels (11) that had been disconnected are connected to the power line (14).

6. Method according to any of the preceding claims, wherein the reference value is less than 100 mA.

7. Solar photovoltaic installation comprising at least one solar tracker (10) with a set of photovoltaic panels (11) that generate electrical power from the solar radiation received by the photovoltaic panels (11) and an inverter (12) that receives the electrical power generated by the set of photovoltaic panels (11) of the solar tracker (10) to inject it into the electrical grid (13), the set of photovoltaic panels (11) being connected in series with each other through a power line (14) that extracts the electrical power generated by the photovoltaic panels (11) to send it to the inverter (12), and wherein the set of photovoltaic panels (11) have a negative terminal (15) and a positive terminal (16) connected to input terminals (17,18) of the inverter (12), the inverter (12) having an overvoltage protection system (29) that blocks the inverter (12) when the voltage between the input terminals (17, 18) of the inverter (12) is above a threshold voltage value, **characterised in that** the installation additionally comprises a current sensor (19) which measures the current flowing in the power line (14), and a control unit (20) which receives the value of the current measured by the current sensor (19) and compares it with a reference value, such that when the current flowing in the power line (14) is lower than the reference value, the control unit (20) sends a signal to act on at least one of the photovoltaic panels (11) to reduce the voltage between the negative terminal (15) and the positive terminal (16) of the set of photovoltaic panels (11) to a voltage value below the threshold voltage value of the overvoltage protection system (29) of the inverter (12), and when the current flowing through the power line (14) is greater than the reference value, the control unit (20) sends another signal to act on at least one of the photovoltaic panels (11) and increase the voltage between the negative terminal (15) and the positive terminal (16) of the set of photovoltaic panels (11).

8. Installation according to claim 7, wherein the control unit (20) is communicated with a motor (21) that moves the set of photovoltaic panels (11) to an angular operating position wherein the surface of the photovoltaic panels (11) is in a plane substantially perpendicular to the solar radiation, such that to reduce the voltage between the negative terminal (15) and the positive terminal (16) of the set of photovoltaic panels (11), the control unit (20) sends an actuating signal to the motor (21) to move the set of photovoltaic panels (11) to an unfocused angular position, which is different from the operating angular position, wherein the solar radiation received on the surface of the photovoltaic panels (11) is reduced, and to increase the voltage between the negative terminal (15) and the positive terminal (16) of the set of photovoltaic panels (11), the control unit (20) sends an actuating signal to the motor (21) to move the set of photovoltaic panels (11) to the angular operating position.

9. Installation according to claim 7 or 8, wherein the control unit (20) communicates with at least one bypass switch (22) that connects and disconnects at least one of the photovoltaic panels (11) from the power line (14), such that to reduce the voltage between the negative terminal (15) and the positive terminal (16) of the set of photovoltaic panels (11), the control unit (20) sends a disconnection signal to the bypass switch (22) to disconnect the photovoltaic panel (11) from the power line (14), and the rest of the photovoltaic panels (11) remain connected in series with each other through the power line (14), and to increase the voltage between the negative terminal (15) and the positive terminal (16) of the set of photovoltaic panels (11), the control unit (20) sends a connection signal to the bypass switch (22) to connect the photovoltaic panel (11) that had been disconnected to the power line (14).

10. Installation according to the preceding claim, wherein the bypass switch (22) connects and disconnects several photovoltaic panels from the power line (14), such that to reduce the voltage between the negative terminal (15) and the positive terminal (16) of the set of photovoltaic panels (11), the control unit (20) sends a disconnection signal to the bypass switch (22) to disconnect several photovoltaic panels (11) from the power line (14), and the rest photovoltaic panels (11) remain connected in series with each other through the power line (14), and in order to increase the voltage between the negative terminal (15) and the positive terminal (16) of the set of photovoltaic panels(11), the control unit (20) sends a connection signal to the bypass switch (22) to connect the photovoltaic panels (11) that had been disconnected to the power line (14).

11. Installation according to any of claims 7 to 10, wherein the current sensor (19) is connected in series in the power line (14) between the positive terminal (16a) of a first photovoltaic panel (11a) and the negative terminal (15b) of a second photovoltaic panel (11b) of the set of photovoltaic panels (11) to receive electric power from the power line (14) and is also connected between the negative terminal (15b) and the positive terminal (16b) of a photovoltaic panel (11b) of the set of photovoltaic panels (11) to receive electric power from the photovoltaic panel (11b).

12. Installation according to the preceding claim, wherein the current sensor (19) comprises a current probe (25) which is inserted in the power line (14) and a power supply (26) which is powered by the current flowing in the power line (14) and by the voltage established between the negative terminal (15b) and the positive terminal (16b) of a photovoltaic panel (11b).

13. Installation according to any one of claims 7 to 12, further comprising a galvanic isolation unit (28) for isolating the control unit (20) from the current sensor (19).

14. Installation according to any one of claims 7 to 13, wherein the reference value is less than 100 mA.
